# EUROPÄISCHE PATENTSCHRIFT

(11) **EP 1 923 759 B1**
(45) Veröffentlichungstag und Bekanntmachung des Hinweises auf die Patenterteilung: **27.01.2016**
(21) Anmeldenummer: 07021351.7
(22) Anmeldetag: 01.11.2007
(51) Int. Cl.: G05B 19/418, G05B 19/042, G05B 19/048, G05B 19/05, H04L 12/06, H04L 12/403, H04L 1/14

(54) **Verfahren und System zur sicheren Datenübertragung**
Secure data transfer method and system
Procédé et système de transmission de données sécurisée

(30) Priorität: 15.11.2006 DE 102006054124
(43) Veröffentlichungstag der Anmeldung: 21.05.2008
(60) Teilanmeldung: 11004477.3
(73) Patentinhaber: Phoenix Contact GmbH & Co. KG, 32825 Blomberg (DE)
(72) Erfinder: Kalhoff, Johannes, 32825 Blomberg (DE); Meyer-Gräfe, Karsten, 33161 Hövelhof (DE)
(74) Vertreter: Blumbach Zinngrebe

(56) Entgegenhaltungen:
- JP-A- 61 021 640
- CAVALIERI S ET AL: "Fault tolerance in Interbus-S standard" COMPUTER STANDARDS AND INTERFACES, ELSEVIER SEQUOIA. LAUSANNE, CH, Bd. 23, Nr. 3, Juli 2001 (2001-07), Seiten 223-235, XP004241215 ISSN: 0920-5489
- WRATIL P ET AL: "SICHERER DATENVERKEHR SOFTWARE-PROFIL SORGT FUER FEHLERFREIE SIGNALUEBERTRAGUNG BUS SYSTEM FOR SECURE DATA COMMUNICATIONS TRAFFIC" ELEKTRONIKPRAXIS, VOGEL, WUERZBURG, DE, Nr. 18, 25. September 2000 (2000-09-25), Seiten 38-43, XP008062456 ISSN: 0341-5589
- "INTERBUS-LOOP: UN RESEAU BAS COUT A DEUX FILS" MESURES REGULATION AUTOMATISME, CFE. PARIS, FR, Nr. 689, 1. November 1996 (1996-11-01), Seiten 99-102, XP000679698 ISSN: 0755-219X
- BLOME W ET AL: "DAS SPRUNGBRETT ZUR OFFENEN AUTOMATISIERUNG" TECHNISCHE RUNDSCHAU, EDITION COLIBRI AG., WABERN, CH, Bd. 10, Nr. 37/96, 1996, Seiten 60-64,66, XP000636533 ISSN: 1023-0823

## Beschreibung

Die Erfindung betrifft allgemein die Sicherheitstechnik von Automatisierungssystemen, und insbesondere ein Verfahren und ein System zur sicheren Datenübertragung zwischen Teilnehmern eines zur Steuerung einer Maschine oder Anlage eingesetzten Kommunikationssystems.

Sicherheitstechnik wird bei automatisierten Prozessen in den verschiedensten industriellen Bereichen eingesetzt, um Mitarbeiter vor Verletzungen zu schützen und die Funktionsfähigkeit von Maschinen und Anlagen zu bewahren. In sicherheitstechnischen Applikationen wird der komplette Signalweg einer Sicherheitsfunktion betrachtet. Dieser besteht aus den sicheren Geräten, wie beispielsweise Steuereinheiten, Sensoren oder Aktoren, und deren Verbindungen untereinander. Diese Verbindungen werden größtenteils in paralleler Verdrahtung ausgelegt. Parallel verkabelte Strecken erfordern jedoch einen hohen Aufwand zur Fehleraufdeckung der sicheren Verkabelung. Dies geschieht durch Diagnosefunktionen der sicheren Geräte, um zum Beispiel Quer- oder Kurzschlüsse oder offene Verbindungen zu erkennen. Je nach Sicherheitsanforderung werden diese Systeme redundant oder zum Teil auch diversitär ausgelegt, um die Möglichkeit der auftretenden Fehler zu beherrschen beziehungsweise aufzudecken. Diese Vorgehensweise ist in der Planung und für einige Applikationsbereiche unpraktikabel und darüber hinaus ist die Ausführung häufig aufwendig und kostenintensiv.

Ein bedeutender Kostenpunkt innerhalb der Planung-, Verkabelungs- und Gerätekosten sind die Transformationskosten für die Signalanpassung zwischen Logik-Signal und Peripherie-Signal, die durch Übergabestellen zwischen den Ein- oder Ausgangskomponenten und der Steuerung anfallen.

In moderneren Systemen lösen sichere Netzwerke große Teile dieser Strecken durch serielle Verbindungen ab, da hierdurch der Signalweg zwischen Ein- bzw. Ausgangskomponente und Steuerung vereinfacht wird. Jedoch ist die serielle Vernetzung mit den aktuellen Netzwerklösungen sehr kostenintensiv und wird derzeit nur für hochwertige Endgeräte genutzt. Grund hierfür ist das derzeit unterschiedliche Wirkprinzip der Verkabelungsüberwachung, der Redundanz in der Verkabelung und der Einfachheit der Sensoren, wie beispielsweise eines rein mechanischen Öffners. Eine Kombination von Endgeräten mit Netzwerkanschluss und paralleler Verdrahtung ist in diesem Zusammenhang nicht möglich. Ein netzwerkfähiger Sensor beispielsweise ist somit nicht einfach gegen einen verkabelten Sensor austauschbar.

An die Übertragung und Verarbeitung sicherheitsgerichteter Daten in einem zur Steuerung eines Automatisierungssystems eingesetzten seriellen Kommunikationssystem sind besondere Anforderungen geknüpft. Sicherheitsgerichtete Daten bezeichnen in diesem Zusammenhang solche Daten, die zur Steuerung sicherheitsrelevanter Prozesse einer Maschine oder Anlage dienen, wobei jeder Prozess sicherheitsrelevant ist, von dem bei Auftreten eines Fehlers eine nicht zu vernachlässigende Gefahr für Menschen und/oder materielle Güter ausgeht.

Ein Ansatz für diese Problematik nach dem Stand der Technik besteht darin, insbesondere die sicherheitsrelevanten Komponenten des Systems ab einem bestimmten Sicherheitslevel mehrkanalig, d.h. redundant aufzubauen. Beispielsweise kann in einem Automatisierungsbussystem vorgesehen sein, Sicherheitsbuskomponenten, d.h. zum Beispiel Busteilnehmer, die einer sicherheitsrelevanten Maschine zugeordnet sind, mit redundanten Hardwarekomponenten auszurüsten. Gleichzeitig kann auch die zentrale Steuerung und der Bus mehrkanalig aufgebaut sein oder gar eine von der Prozeßsteuerung getrennte spezielle und unter Umständen redundant aufgebaute Sicherheitssteuerung zur Steuerung der sicherheitsrelevanten Komponenten vorgesehen sein. Der Bus ist typischerweise mit einem sicheren Protokoll versehen, wobei auch das sichere Protokoll selbst eine Redundanz aufweisen kann. Die Sicherheitssteuerung führt im wesentlichen die Verknüpfungen der sicherheitsbezogenen Eingangsinformationen durch und übermittelt daraufhin, beispielsweise über einen Automatisierungsbus, sicherheitsbezogene Verknüpfungsdaten an Ausgangskomponenten. Die Ausgangskomponenten ihrerseits bearbeiten die empfangenen Sicherheitsmaßnahmen und geben nach positiver Prüfung diese an die Peripherie aus. Darüber hinaus schalten sie ihre Ausgänge in einen sicheren Zustand, wenn sie einen Fehler feststellen oder innerhalb einer vorgegebenen Zeitdauer keine gültigen Daten mehr empfangen haben. Ein Steuerungssystem zum Steuern von sicherheitskritischen Prozessen, bei dem die sicherheitsbezogenen Einrichtungen eine mehrkanalige Struktur aufweisen, ist beispielsweise aus EP 1 188 096 B1 bekannt.

Ein sicheres Protokoll, d.h. ein Verfahren zur Erhöhung der Zuverlässigkeit der Datenübertragung, ist beispielsweise in JP 61 021640 A beschrieben, wobei in dem dort beschriebenen Verfahren der Empfänger einer Datennachricht das Format der Nachricht überprüft und die Nachricht zur Bestätigung an den Sender zurücküberträgt, wenn das Format bei der Prüfung als richtig erkannt wurde.

Ferner ist bekannt, speziell ausgebildete, sichere Kommunikationsteilnehmer bereitzustellen, bei denen eine Erhöhung der Sicherheit durch eine redundante Aüswertelogik in Kombination mit einem Fail-Safe-Vergleicher erreicht wird. Derartige sichere Busteilnehmer werden beispielsweise bei auf INTERBUS-Safety basierenden Systemen eingesetzt.

Aus "Fault tolerance in Interbus-S standard" von S. Cavalieri et al., Computer Standards and Interfaces, Bd. 23, Nr. 3, Juli 2001, Seiten 223-235 ist eine Protokollerweiterung für Interbus-S bekannt, die darauf basiert, dass mehrere als Master/Slave bezeichnete Busteilnehmer vorgesehen sind, die sowohl als Master als auch als Slave fungieren können. Fällt der aktuelle Master aus, so wird die Masterfunktionalität automatisch von einem anderen der Master/Slave-Busteilnehmer übernommen. Bei dem bei Interbus eingesetzten Summenrahmenverfahren wird in einem Zyklus ein Datenrahmen mit Slots für jeden Busteilnehmer wie bei einem Schieberegister durch die Teilnehmer geschoben, wobei vor dem Übertragen von Datenzyklen ein Identifikationszyklus zur Initialisierung vorgesehen ist, in welchem die einzelnen Busteilnehmer Identifikations- und Konfigurationsdaten an den Master übermitteln. Zur Erkennung von .Datenfehlern ist in jeden Datenrahmen eine Prüfsumme vorgesehen, wobei die Busteilnehmer den Master über erkannte Fehler mittels im Datenrahmen enthaltener Kontrollbits informieren. In "Sicherer Datenverkehr" von P. Wratil et al., Elektronikpraxis, Nr. 18, 25. Septemver 2000, Seiten 38-43, wird eine Interbus-Safety-Architektur beschrieben, an der sich sowohl sichere als auch normale Teilnehmer betreiben lassen. Sicherheitsgerichtete dezentrale Einheiten enthalten dabei zwei redundante Schnittstellen-Einheiten, die unabhängig voneinander Datenpakete empfangen und auf Fehlerfreiheit überprüfen, wobei die Ausführung der gewünschten Aktion erst bei Übereinstimmung erfolgt. Jede sichere Einheit enthält zusätzliche eine Uhr, die alle Daten auf Aktualität untersucht, so dass ein Abbruch des Datenverkehrs oder ein Ausfall der Steuerung sofort erkannt wird und es zu einer programmierbaren Sicherheitsfunktion kommt.

Eine Beschreibung des als Interbus bezeichneten Feldbusses findet sich ferner in W. Blome et al,: "Das Sprungbrett zur offenen Automatisierung", Technische Rundschau, Edition Colibri AG, Wabern, CH, Bd. 10, Nr. 37/96, 1996, Seiten 60-64, 66, sowie in "INTERBUS-LOOP: UN RESEAU BAS COUT A DEUX FILS", Mesures Regulation Automatisme, CFE. Paris, FR, Nr. 689, 1. November 1996, Seiten 99-102.

Bei den beschriebenen Systemen führt jedoch die redundante Bereitstellung von Hardwarekomponenten nachteilig zu erhöhtem Aufwand und zu erhöhten Kosten.

Aufgabe der Erfindung ist es daher, einen Weg aufzuzeigen, wie in einem Kommunikationssystem eine sichere Datenübertragung auf einfache und kostengünstige Weise bereitgestellt werden kann, insbesondere unter Einsatz von Standardkomponenten und unter Einbindung von einfachen, insbesondere mechanischen Sensoren oder Aktuatoren.

Weitere Aufgabe der Erfindung ist es, ein sicherheitsbezogenes Kommunikationssystem bereitzustellen, welches mit geringen Hardware-Kosten auskommt und flexibel an die jeweiligen Anfordernisse angepaßt werden kann.

Die Erfindung löst dieses Problem mit einem Verfahren mit den Merkmalen des Anspruchs 1 sowie einem zum Ausführen eines solchen Verfahrens ausgebildeten System nach Anspruch 16. Weiterbildungen der Erfindung sind in den Unteransprüchen angegeben.

Dementsprechend sieht ein erfindungsgemäßes Verfahren zur sicheren Datenübertragung zwischen wenigstens einem ersten und einem zweiten Teilnehmer eines Kommunikationssystems, das zur seriellen Datenübertragung zwischen den Teilnehmern ausgebildet ist, zunächst das Übertragen einer Datennachricht von dem ersten Teilnehmer zu dem zweiten Teilnehmer vor. Die Datennachricht wird durch eine zweite, in dem zweiten Teilnehmer angeordnete Auswerteeinheit überprüft. In Abhängigkeit des Ergebnisses der Überprüfung der Datennachricht durch die zweite Auswerteeinheit generiert diese eine Quittungsnachricht, die vom zweiten Teilnehmer zum ersten Teilnehmer übertragen wird. Vorzugsweise wird nur bei erfolgreicher Überprüfung der Datennachricht eine Quittungsnachricht gesendet. Die Quittungsnachricht wird nach Empfang durch die erste, in dem ersten Teilnehmer angeordnete Auswerteeinheit überprüft. Es erfolgt somit eine redundante Überprüfung durch die erste und zweite Auswerteeinheit, wobei der erste und zweite Teilnehmer ein korrespondierendes Teilnehmerpaar bilden.

Das Verfahren wird besonders bevorzugt eingesetzt in der Sensorebene von Systemen zur Steuerung sicherheitsrelevanter automatisierter Prozesse. Dementsprechend ist der erste oder der zweite Teilnehmer besonders vorteilhaft als Sensor oder Aktuator eines Automatisierungssystems ausgebildet. Die Datennachricht umfasst somit vorteilhaft ein Eingangs- oder Ausgangssignal eines Sensors oder Aktuators des Automatisierungssystems.

Erfindungsgemäß umfasst das Überprüfen der Datennachricht und/oder der Quittungsnachricht durch die erste bzw. zweite Auswerteeinheit ein Überprüfen der in der Nachricht enthaltenen Daten auf Plausibilität. Dementsprechend erfolgt ein Überprüfen der in der durch den ersten Teilnehmer abzusendenden Datennachricht enthaltenen Daten durch die erste Auswerteeinheit, bevor die Datennachricht zu dem zweiten Teilnehmer übertragen wird, wobei nach Empfang der Datennachricht eine weitere - Überprüfung der enthaltenen Daten durch die zweite Auswerteeinheit im zweiten Teilnehmer erfolgt. Das Überprüfen der Quittungsnachricht beschränkt sich auf ein Registrieren des Empfangs einer vordefinierten Nachricht.

In einer weiteren vorteilhaften Ausführungsform generiert der zweite Teilnehmer mittels der zweiten Auswerteeinheit eine Quittungsnachricht, welche die in der empfangenen Datennachricht enthaltenen Daten umfasst. In dieser Ausführungsvariante umfasst das Überprüfen der Quittungsnachricht durch die erste Auswerteeinheit ein vergleichen von in der Quittungsnachricht enthaltenen Daten mit in der zuvor übertragenen Datennachricht enthaltenen Daten. Zu diesem Zweck werden die vom ersten Teilnehmer in einer Datennachricht übertragenen Daten zumindest bis zum Empfang der entsprechenden Quittungsnachricht zwischengespeichert.

In einer nochmals weiteren vorteilhaften Ausführungsform generiert der zweite Teilnehmer eine Quittungsnachricht, die eine weitere gültige Datennachricht umfasst.

Wird bei Überprüfen der Datennachricht oder der Quittungsnachricht durch eine Auswerteeinheit ein Fehler erkannt, führt der Teilnehmer, dessen Auswerteeinheit den Fehler erkannt hat, vorzugsweise eine sicherheitsgerichtete Funktion aus.

Zur Datenübertragung zwischen den Teilnehmern kann je nach Einsatzzweck vorteilhaft ein kabelgebundener oder drahtloser serieller Bus oder ein kabelgebundenes oder berührungslos wirkendes Netzwerk vorgesehen sein. Im einfachsten Fall wird ein Punkt-zu-Punkt-Protokoll zwischen dem ersten und zweiten Teilnehmer verwendet, wobei einer der Teilnehmer beispielsweise als Sensor oder Aktuator und der andere als Eingangs- bzw. Ausgangskomponente, im Folgenden auch als E/A-Modul bezeichnet, ausgebildet ist.

Die serielle Datenübertragung zwischen den Teilnehmern des Kommunikationssystems erfolgt vorteilhaft auf der Grundlage eines vorgegebenen Kommunikationsprotokolls. Da das beschriebene Verfahren sowohl in der Standard-Sensorik und -Aktuatorik vorteilhaft eingesetzt werden kann als auch in der Sicherheitstechnik, in der zusätzliche Anforderungen an das verwendete Kommunikationsprotokoll gestellt werden, ist das vorgegebene Kommunikationsprotokoll vorzugsweise wahlweise sicher oder nicht sicher ausgebildet.

Für die Steuerung sicherheitsrelevanter Prozesse wird dementsprechend vorteilhaft ein vorgegebenes sicheres Kommunikationsprotokoll eingesetzt, bei dem beispielsweise durch redundante Dateninhalte eine Fehlererkennung ermöglicht wird, wobei die Überprüfung der Datennachricht und/oder der Quittungsnachricht durch die erste bzw. zweite Auswerteeinheit eine Fehlerüberprüfung gemäß dem vorgegebenen sicheren Kommunikationsprotokoll umfasst. Das sichere Kommunikationsprotokoll kann zu diesem Zweck beispielsweise ein Prüfsummenverfahren wie die zyklische Redundanzprüfung (CRC; Cyclic Redundancy Check) umfassen.

Ein sicheres Kommunikationsprotokoll kann ferner mit Vorteil vorsehen, dass von allen oder einer vorgegebenen Gruppe von Teilnehmern des Kommunikationssystems wiederkehrend, beispielsweise einmal pro Kommunikationszyklus, eine spezifische Nachricht gesendet wird, welche sich zusätzlich nach einem definierten Algorithmus ändern kann.

Die Erfindung beruht somit vorteilhaft auf dem Prinzip einer seriellen sicheren Verbindung zwischen zwei

Teilnehmern. Um die nach dem Stand der Technik vorgesehene sichere und redundant ausgebildete Auswerteeinheit je Gerät zu reduzieren, wird in jedem Endpunkt ein Teil der sicheren Auswerteeinheit verlagert. Durch eine Quittierung der Daten wird die Sicherheit redundant zur Verfügung gestellt.

Durch die Verteilung der die Sicherheit gewährleistenden Redundanz auf zwei verteilte Auswerteeinheiten wird besonders vorteilhaft der Einsatz von Standardkomponenten für die Übertragung sicherer Daten ermöglicht.

In einer weiteren Ausführungsform des erfindungsgemäßen Verfahrens ist die zweite Auswerteeinheit zusammen mit der ersten Auswerteeinheit in einer gemeinsamen Baugruppe angeordnet, die in dieser Ausführungsform zweikanalig ausgebildet ist. Auch in dieser Ausführungsform kann vorteilhaft eine zweikanalige Standardkomponente verwendet werden.

Durch die verteilte Redundanz und insbesondere durch den Datenaustausch zwischen der ersten und zweiten Auswerteeinheit wird ferner besonders vorteilhaft ermöglicht, einfache und sogar mechanische Bauelemente, wie beispielsweise als Öffner oder Schließer ausgebildete Standard- oder Sicherheits-Schalter, unter Aufrechterhaltung der Sicherheit mit einzubinden.

Dementsprechend ist in einer weiteren besonders bevorzugten Ausführungsform der Erfindung zwischen die erste und die zweite Auswerteeinheit ein Steuer- oder Sensorelement geschaltet, das selbst keine Auswerteeinheit umfasst und insbesondere als einfacher, vorzugsweise mechanischer Sensor oder Aktuator ausgebildet ist.

Dabei ist vorzugsweise das mechanische Element mit einem Ausgang der ersten Auswerteeinheit und mit einem Eingang der zweiten Auswerteeinheit verbunden, wobei ein Ausgang der zweiten Auswerteeinheit mit einem Eingang der ersten Auswerteeinheit verbunden ist. Eine solche spezielle Verdrahtung ist auf besonders einfache Weise mit einem ersten und zweiten Teilnehmer zu realisieren, welche in einer gemeinsamen Baugruppe angeordnet sind.

Zur Überwachung der verteilten Auswerteeinheiten wird vorzugsweise eine in dem jeweiligen Teilnehmer angeordnete Überwachungsschaltung eingesetzt, die den Datenstrom zu und/oder von der jeweils zugeordneten Auswerteeinheit gemäß einem vorgegebenen Protokoll auf Gültigkeit überwacht und im Fehlerfall die zugeordnete Auswerteeinheit und/oder einen durch die zugeordnete Auswerteeinheit gesteuerten Sensor oder Aktor in einen sicheren Zustand setzt oder einen entsprechenden Ersatzwert nutzt. Über eine fehlende Quittungsnachricht beziehungsweise ein Ausbleiben des gültigen Datenstroms wird die Information über das Auftreten eines Fehlers der Gegenstelle unverzüglich mitgeteilt.

Wie bereits oben erwähnt, kommunizieren die Auswerteeinheiten über ein sicheres Protokoll miteinander und kontrollieren die versandten Daten inhaltlich. Die an der Auswerteeinheit angeschaltete Überwachungsschaltung prüft den Datenstrom auf Gültigkeit, wobei dies im einfachsten Fall durch eine Mustererkennung erfolgt, ohne die sicheren Inhalte zu kennen. Dementsprechend umfasst das Überwachen des Datenstroms durch die Überwachungsschaltung vorzugsweise das Erkennen wenigstens eines vorgegebenen Musters. Vorteilhaft kann das Überwachen auch eine dynamische Mustererkennung umfassen, beispielsweise durch Vergleichen einfacher Inhalte. Zu diesem Zweck können die übertragenen Datennachrichten mit einem Datum versehen sein, welches sich nach einem vorgegebenen Algorithmus ändert. Die Überwachungsschaltung kann ferner die ihr zugeordnete Auswerteeinheit auf Funktionsfähigkeit überwachen, beispielsweise mittels einer Watchdog-Funktion. Als Watchdog-Funktion wird in diesem Zusammenhang eine Funktion der Überwachungsschaltung bezeichnet, welche den Erhalt regelmäßiger Signale von der zugeordneten Auswerteeinheit überwacht und das Ausbleiben dieser Signale als Fehler erkennt.

Das oben beschriebene Überprüfen einer Daten- oder Quittungsnachricht durch eine Auswerteeinheit, sowie das Überwachen des Datenstroms durch eine Überwachungsschaltung und/oder das Überwachen der Funktionsfähigkeit einer Auswerteeinheit durch eine Überwachungsschaltung umfassen typischerweise das Ausführen einer Funktion, wobei die Funktion vorteilhaft identisch in der ersten und zweiten Auswerteeinheit zur Verfügung steht. Zu diesem Zweck ist vorteilhaft ein Speicher und ein Mikroprozessor vorgesehen, wobei das Ausführen der Funktion das Ausführen eines in dem Speicher gespeicherten Ablaufcodes oder Programms durch den Mikroprozessor umfasst.

Aufgrund der Vielseitigkeit der Sensorik und Aktorik eines Automatisierungssystems und der sich daraus ergebenden Vielzahl unterschiedlicher Funktionen, welche sich nicht beliebig vereinheitlichen lassen, ist es nicht zweckmäßig, in einem als E/A-Modul ausgebildeten Teilnehmer, welcher als ein zu einem Sensor oder Aktuator korrespondierender Teilnehmer eingesetzt wird, die gesamte Vielzahl unterschiedlicher Funktionalitäten standardmäßig vorzusehen.

vielmehr wird vorteilhaft ein Teil der im Sensor oder Aktuator hinterlegten sicherheitsgerichteten Applikationsfunktion und/oder zum Ausführen der Funktion erforderliche Parameter von dem Sensor oder Aktuator zu dem korrespondierenden Teilnehmer übertragen. Dies erfolgt vorzugsweise innerhalb einer Initialisierungsphase vor Aufnahme der Datenübertragung sicherheitsgerichteter Daten zwischen den Teilnehmern.

Der korrespondierende Teilnehmer, zu dem von einem als Sensor oder Aktuator ausgebildeten Teilnehmer Teile einer sicherheitsgerichteten Applikationsfunktion in Form eines Programms oder Ablaufcodes übertragen werden, weist vorzugsweise einen entsprechenden Interpreter zum Ausführen des Programms oder Ablaufcodes auf.

Durch Laden eines Teils des Applikationsprogramms eines Sensors oder Aktuators, insbesondere desjenigen Teils, welcher zur Erhöhung der Sicherheit redundant zur Verfügung stehen soll, auf die kooperierende Eingangs- bzw. Ausgangskomponente kann diese die Sensor- bzw. Aktuator-Applikation mit bearbeiten. Die hierzu notwendigen Rohdaten wie beispielsweise Sensor-Signale und die zur Weiterverarbeitung benötigten Ergebnisse werden zwischen den Teilnehmern seriell ausgetauscht. Dies ermöglicht besonders vorteilhaft eine kostengünstigere Herstellung des Sensors oder Aktuators, da durch die Mitwirkung des intelligenten Eingangs- bzw. Ausgangsgerätes, das den übertragenen Applikations-Code zum Beispiel mittels eines Interpreters abarbeitet, im Sensor bzw. Aktuator nur eine einkanalige Hardware benötigt wird.

Dementsprechend sieht das Verfahren vorteilhaft vor, dass das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem ausführenden Teilnehmer hinterlegten Funktion erfolgt, wobei vor Ausführen der Funktion Teile der auszuführenden Funktion und/oder Parameter zum Ausführen der Funktion von einem weiteren Teilnehmer zu dem ausführenden Teilnehmer übertragen werden.

Teile eines durch eine Auswerteeinheit auszuführenden Auswerteprogramms können zu dem jeweiligen Teilnehmer wie oben beschrieben von einem anderen Teilnehmer, insbesondere von der Auswerteeinheit eines korrespondierenden Sensors oder Aktuators übertragen werden. Alternativ können die entsprechenden Programmteile auch von einer zentralen Steuereinheit übertragen werden, beispielsweise nach Auslesen der Funktionalität des korrespondierenden Sensors oder Aktuators durch die Steuereinheit. Die Übertragung der Programmteile kann vorteilhaft automatisch erfolgen, sowie gegebenenfalls in Abhängigkeit einer vorgegebenen Projektierung des Automatisierungssystems. Auch kann die Übertragung je nach Einsatzzweck über einen separaten Kommunikationskanal erfolgen.

Wie bereits oben beschrieben, ist der erste oder zweite Teilnehmer vorzugsweise als Sensor oder Aktuator ausgebildet. Zur Kommunikation mit übergeordneten Datenverarbeitungseinheiten ist der jeweils zu dem Sensor oder Aktuator korrespondierende und beispielswiese als E/A-Modul ausgebildete Teilnehmer vorzugsweise an ein weiteres, übergeordnetes Bussystem angeschlossen.

Auch können eine Mehrzahl erster oder zweiter Teilnehmer vorgesehen sein. Beispielsweise können eine Mehrzahl als Sensor oder Aktuator ausgebildete Teilnehmer über einen seriellen anreihbaren Bus mit einem korrespondierenden Teilnehmer verbunden sein. Vorteilhaft kann die serielle Kommunikation zwischen den Teilnehmern nach dem Master/Slave-Prinzip erfolgen, wobei beispielsweise der korrespondierende Teilnehmer den Master und die als Sensor oder Aktuator ausgebildeten Teilnehmer die Slaves bilden.

Der korrespondierende Teilnehmer kann ferner vorteilhaft zusätzlich an einen übergeordneten Bus angeschlossen sein, der beispielsweise als serieller, auf einem Feldbus oder auf Ethernet basiertem Bus ausgebildet ist.

Ein erfindungsgemäßes System zur Übertragung sicherheitsgerichteter Daten zur Steuerung eines Automatisierungssystems, welches insbesondere zur Ausführung eines oben beschriebenen Verfahrens ausgebildet ist, umfasst ein serielles Kommunikationssystem mit wenigstens einem ersten und einem zweiten daran angeschlossenen Teilnehmer, wenigstens eine erste, in dem ersten Teilnehmer angeordnete Auswerteeinheit, und wenigstens eine zweite, in dem zweiten Teilnehmer angeordnete Auswerteeinheit, wobei die zweite Auswerteeinheit zum Überprüfen einer von dem ersten Teilnehmer empfangenen Datennachricht und zum Generieren einer Quittungsnachricht in Abhängigkeit des Ergebnisses der Überprüfung der Datennachricht ausgebildet ist, die erste Auswerteeinheit zum Überprüfen einer von dem zweiten Teilnehmer empfangenen Quittungsnachricht ausgebildet ist und der erste und/oder zweite Teilnehmer dazu ausgebildet sind, im Fehlerfall eine Sicherheitsfunktion auszuführen.

Besonders vorteilhaft weist das Kommunikationssystem zur seriellen Datenübertragung zwischen den Teilnehmern einen kabelgebundenen oder drahtlos wirkenden seriellen Bus auf. Der erste und/oder zweite Teilnehmer ist vorteilhaft als Sensor oder Aktuator eines Automatisierungssystems ausgebildet. Die Auswerteeinheiten dienen dementsprechend insbesondere zur Auswertung sicherheitsgerichteter Eingangs- und/oder Ausgangs-Daten eines Sensors und/oder Aktors mit Einfluss auf einen sicherheitsrelevanten Prozess eines Automatisierungssystems.

Die erste und zweite Auswerteeinheit bilden somit eine verteilte Redundanz, wobei die Auswerteeinheiten zu diesem Zweck in unterschiedlichen Teilnehmern angeordnet sind.

In einer bevorzugten Ausführungsform bilden der erste und der zweite Teilnehmer ein korrespondierendes Teilnehmerpaar, wobei einer der Teilnehmer als Sensor oder Aktuator und der andere Teilnehmer als korrespondierende Eingangs- bzw. Ausgangskomponente ausgebildet sind. Ferner können die in korrespondierenden Teilnehmern angeordneten ersten und zweiten Auswerteeinheiten vorteilhaft die Funktionalität der jeweils anderen Auswerteeinheit mit umfassen. Es wird somit eine in beide Richtungen wirkende Schnittstelle bereitgestellt, so dass die Teilnehmer als Eingangs- oder Ausgangskomponenten verwendet werden können.

Zur Auswertung von Eingangs- und/oder Ausgangs-Signalen, beispielsweise Sensorsignale oder Steuersignale für Aktuatoren, sind die erste und/oder zweite Auswerteeinheit zum Überprüfen von in einer Datennachricht oder einer Quittungsnachricht enthaltenen Daten auf Plausibilität ausgebildet. Ferner können die erste und/oder zweite Auswerteeinheit vorteilhaft dazu ausgebildet sein, in einer Datennachricht enthaltene Daten mit Daten zu vergleichen, welche in einer Quittungsnachricht enthalten sind. In einer weiteren vorteilhaften Ausführungsform ist die erste und/oder zweite Auswerteeinheit dazu ausgebildet, eine weitere gültige Datennachricht als Quittungsnachricht zu generieren.

Das System kann ferner vorteilhaft jede der oben im Zusammenhang mit den Verfahren beschriebenen Ausführungsvarianten aufweisen.

Dementsprechend sind die Auswerteeinheiten dazu ausgebildet, Daten unter Verwendung eines sicheren Kommunikationsprotokolls auszutauschen. Für eine möglichst flexible Einsatzfähigkeit können die Auswerteeinheiten vorzugsweise digitale und analoge Werte über das Protokoll darstellen, wobei Laufzeit- und Parameterdaten für sichere und nicht sichere Anwendungen auch gemischt vorkommen können.

Ferner können besonders vorteilhaft einfache, insbesondere mechanische Sensoren oder Aktoren in das System eingebunden werden, die über keine Auswerteeinheit zur Auswertung sicherheitsgerichteter Daten verfügen und die zu diesem Zweck zwischen die erste und die zweite Auswerteeinheit geschaltet werden. Die Möglichkeit, neben netzwerkfähigen Sensoren und Aktuatoren auch mechanische Standardkomponenten einsetzen zu können, vereinfacht die Reparatur bestehender Systeme und ist kompatibel zu derzeitigen Sensoren und Aktuatoren.

Für eine einfache Verdrahtung einer mechanischen Standardkomponente sind der erste und zweite Teilnehmer vorteilhaft in einer gemeinsamen Baugruppe angeordnet.

Zur weiteren Erhöhung der Sicherheit ist vorzugsweise jeder Auswerteeinheit eine Überwachungsschaltung zugeordnet, die dazu ausgebildet ist, den Datenstrom zu und/oder von der zugeordneten Auswerteeinheit gemäß einem vorgegebenen Protokoll auf Gültigkeit zu überwachen und im Fehlerfall die zugeordnete Auswerteeinheit und/oder einen durch die zugeordnete Auswerteeinheit gesteuerten Sensor oder Aktor in einen sicheren Zustand zu setzen.

Die Überwachungsschaltung ist zu diesem Zweck bevorzugt zum Erkennen eines vorgegebenen statischen oder dynamischen Musters ausgebildet und kann ferner eine Watchdog-Funktion zur Überwachung der Funktionsfähigkeit der zugeordneten Auswerteeinheit aufweisen. Im einfachsten Fall reicht eine Überlebensüberwachung der einkanaligen Hardware aus, um den sicheren Prozess zu kontrollieren und im Fehlerfall den Ein- oder Ausgang zur Gewährleistung der Sicherheit mit einem Ersatzwert zu versehen.

Wie bereits oben im Zusammenhang mit dem Verfahren beschrieben, ist das Kommunikationssystem vorteilhaft als Master/Slave-System ausgebildet, wobei der erste oder zweite Teilnehmer den Master bildet. Ferner ist der erste oder zweite Teilnehmer vorzugsweise an ein weiteres, übergeordnetes Kommunikationssystem angeschlossen, um Daten mit einer übergeordneten Datenverarbeitungs- oder Steuereinheit auszutauschen.

Um nicht Funktionalitäten der Auswerteeinheiten für jeden denkbaren Einsatzzweck in jedem Teilnehmer vorhalten zu müssen, sind der erste und/oder zweite Teilnehmer vorteilhaft dazu ausgebildet, Funktionsteile und/oder Parameter von einem weiteren Teilnehmer anzufordern.

Dementsprechend ist vorzugsweise wenigstens ein Teilnehmer dazu ausgebildet, das Überprüfen einer Datennachricht durch eine Auswerteeinheit, das Überprüfen einer Quittungsnachricht durch eine Auswerteeinheit, das

Überwachen des Datenstroms durch eine Überwachungsschaltung und/oder das Überwachen der Funktionsfähigkeit einer Auswerteeinheit durch eine Überwachungsschaltung durch Ausführen einer in dem Teilnehmer hinterlegten Funktion durchzuführen, wobei der wenigstens eine Teilnehmer ferner dazu ausgebildet ist, zum Ausführen der Funktion ausführbare Funktionsteile und/oder Parameter von einem weiteren Teilnehmer anzufordern.

Zweckmäßigerweise weist der entsprechende Teilnehmer einen Speicher zum Speichern des Ablaufcodes der auszuführenden Funktion auf, in dem eine Grundfunktionalität des Teilnehmers abgelegt ist und in dem zusätzlich in der Anlaufphase des Systems die nach Bedarf angeforderten oder automatisch erhaltenen Funktionsteile und/oder Parameter abgelegt werden. Zur Ausführung der Funktion weist der Teilnehmer vorteilhaft einen Mikroprozessor auf. Ferner ist zur Erhöhung der Flexibilität vorteilhaft ein Interpreter im Teilnehmer vorgesehen, welcher zur Ausführung der zusätzlichen Funktionsteile eingesetzt wird.

Die zusätzlichen Funktionsteile und/oder Parameter können auch vorteilhaft von einer zentralen Steuereinheit, beispielsweise in Abhängigkeit einer vorgegebenen Projektierung des Automatisierungssystems, zur Verfügung gestellt werden.

Durch die Erfindung wird auf einfache Weise eine sichere Datenkommunikation ermöglicht. Die erfindungsgemäß ausgestatteten Sensoren oder Aktuatoren können kostengünstiger und mit geringerer Varianz erzeugt werden. Dies gilt auch für als Zentral-Baugruppen oder dezentrale Netzwerkteilnehmer ausgebildete E/A-Karten von Automatierungssystemen.

Ferner werden durch die vorliegende Erfindung derzeitige Installationsrichtlinien vereinfacht, wodurch Fehlverhalten und Unwissenheit bezüglich der angeschlossenen Sensoren und Aktuatoren weniger Einfluss auf die Funktion der Sicherheitstechnik hat.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1a:: eine schematische Darstellung eines beispielhaften Signalwegs eines Eingangssignals hin zu einer Steuereinheit bei paralleler Anbindung,
- Fig. 1b:: eine schematische Darstellung eines beispielhaften Signalwegs eines Eingangssignals hin zu einer Steuereinheit bei serieller Anbindung,
- Fig. 2:: eine schematische Darstellung eines Ausführungbeispiels mit einem ersten und zweiten Teilnehmer,
- Fig. 3:: eine schematische Darstellung eines Ausführungsbeispiels, bei dem zwischen einen ersten und einen zweiten Teilnehmer ein Not-Aus-Schalter geschaltet ist,
- Fig. 4:: eine schematische Darstellung eines Ausführungsbeispiels, bei dem zwischen einen ersten und einen zweiten Teilnehmer ein Not-Aus-Schalter geschaltet ist, wobei der erste und der zweite Teilnehmer in einer gemeinsamen Baugruppe angeordnet sind,
- Fig. 5: eine schematische Darstellung einer ersten Ausführungsvariante der funktionalen Komponenten des in Fig. 2 dargestellten ersten und zweiten Teilnehmers,
- Fig. 6: eine schematische Darstellung einer zweiten Ausführungsvariante der funktionalen Komponenten des in Fig. 2 dargestellten ersten und zweiten Teilnehmers,
- Fig. 7: eine schematische Darstellung eines Ausführungsbeispiels, bei dem die serielle Kommunikation zwischen dem ersten und zweiten Teilnehmer drahtlos erfolgt, und
- Fig. 8: eine schematische Darstellung eines Ausführungsbeispiels, bei dem der erste und zweite Teilnehmer ein Lichtgitter bilden.

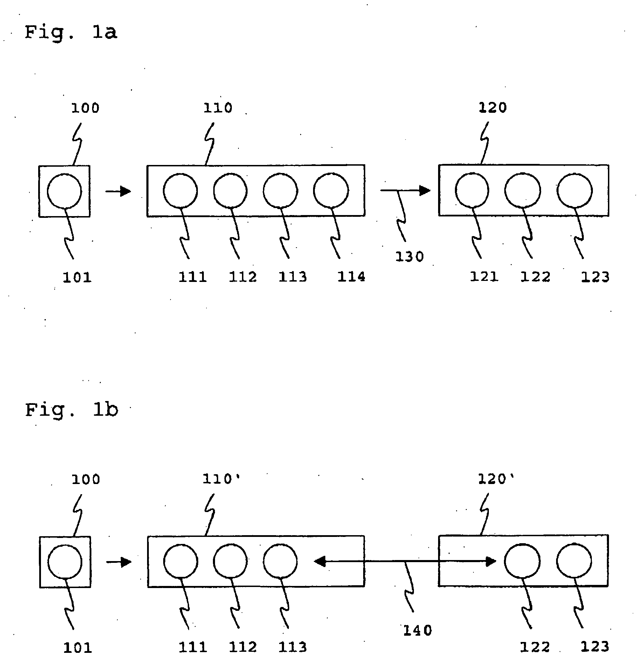

Die Figuren 1a und 1b zeigen für eine sicherheitstechnische Applikation beispielhaft den Signalweg eines Eingangssignals von einem Sensor hin zu einem als Eingangskomponente ausgebildeten E/A-Modul, wobei der typische Aufwand für eine parallele und eine serielle Anbindung verglichen wird.

Wie in Fig. 1a dargestellt, wird eine physikalische Größe 101 eines Prozesses 100 ermittelt. Dazu wird in einer prozessnahen Einheit 110 mittels eines Sensors 111 zunächst eine Messung einer typischerweise analogen Größe vorgenommen. Diese elektrisch auswertbare Meßgröße wird mittels eines A/D-Wandlers 112 in eine digital verarbeitbare Größe umgewandelt und von einer Verarbeitungseinheit 113 zu einem digitalen Applikationswert verarbeitet. Bei paralleler Verdrahtung erfolgt nun zum Zweck der Datenübertragung zu einem E/A-Modul 120 wiederum eine Umwandlung des digitalen Applikationswertes in ein Norm-Signal mittels eines D/A-Wandlers 114. Dieses Norm-Signal wird nun mittels einer Verkabelung 130, beispielsweise über Klemmstellen, Unterverteiler, etc., zum E/A-Modul 120 übertragen, wobei an die Verkabelung für die Übertragung sicherheitsgerichteter Signale typischerweise spezielle Anforderungen zu stellen sind. In dem E/A-Modul 120 erfolgt mittels A/D-Wandler 121 eine Rückumwandlung des übertragenen Signals in den digitalen Applikationswert, welcher mittels Verarbeitungseinheit 122 verarbeitet und erforderlichenfalls zur Weiterleitung an weiterführende Systeme mittels Wandler 123 zum Beispiel in ein Netzwerkprotokoll umgesetzt wird.

Die Erfindung vereinfacht den Signalweg aus Sicht der Sicherheitstechnik derart, dass die Aufwände in den Geräten, der Sensorik bzw. Aktuatorik und der Verkabelung minimiert werden können. Zu diesem Zweck sieht die Erfindung, wie in Fig. 1b dargestellt, vorteilhaft eine direkte serielle Verbindung 140 zwischen den Verarbeitungeinheiten 113 und 122 des Sensor-Moduls 110' bzw. des E/A-Moduls 120' vor.

In nicht sicherheitsrelevanten Systemen sind aus dem Stand der Technik serielle Bussysteme zur Ansteuerung von Sensoren und Aktoren zwar bereits teilweise bekannt, in der Sicherheitstechnik kommen jedoch Anforderungen hinzu, weiche durch den Stand der Technik nicht erfüllt werden.

Eine Möglichkeit zur Einhaltung von Sicherheitsvorgaben bestünde darin, in den Sensoren oder Aktuatoren redundante Auswerteeinheiten vorzusehen. Um Hardwarekosten zu minimieren ist in einem erfindungsgemäßen System hingegen vorteilhaft eine verteilte Redundanz der Auswerteeinheiten vorgesehen, indem jeweils eine Auswerteeinheit in korrespondierenden Teilnehmern angeordnet ist.

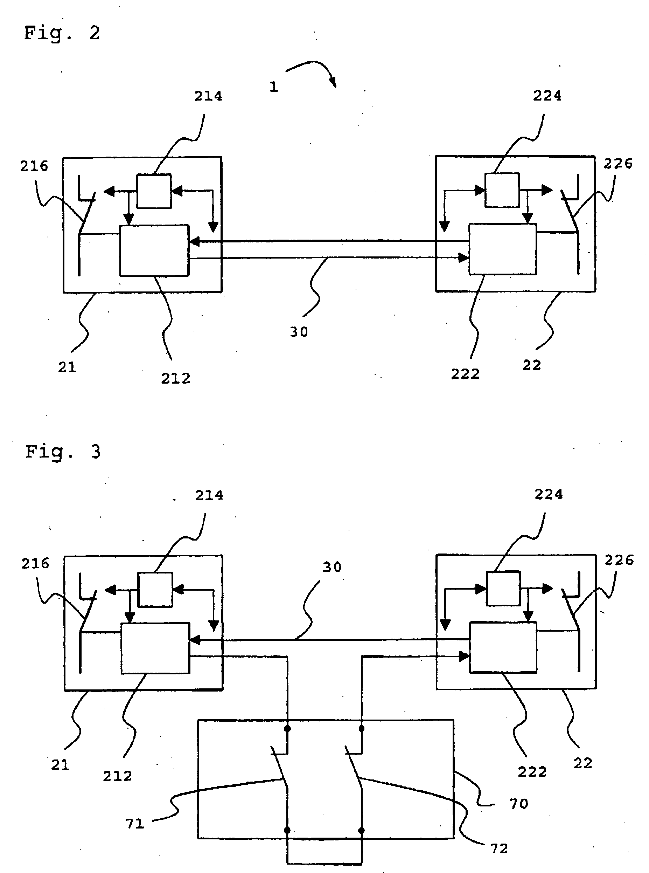

In Fig. 2 ist ein beispielhaftes serielles Kommunikationssystem 1 dargestellt, welches für den Einsatz der Erfindung geeignet ist und die zwei Teilnehmer 21 und 22 umfasst, zwischen denen über das Bussystem 30 eine serielle sichere Verbindung besteht. Die Busteilnehmer 21 und 22 beinhalten jeweils eine Auswerteeinheit 212 bzw. 222, die je einen Teil eines korrespondierenden Paares von Auswerteeinheiten bilden zur erreichung einer verteilten Redundanz. Die Teilnehmer 21 und 22 beinhalten ferner jeweils eine Überwachungsschaltung 214 bzw. 224, welche den Datenstrom überwacht, sowie eine Schnittstelle zu einer sicherheitsrelevanten Applikation 216 bzw. 226, die in Fig. 2 symbolisch als Schalter dargestellt ist. Die sicherheitsrelevante Applikation umfasst typischerweise ein ausführbares, in einem Speicher abgelegtes Programm, welches geeignet ist, Einfluss auf möglicherweise gefahrbringende Prozesse eines Automatisierungssystems zu nehmen.

Die Auswerteeinheiten 212 und 222 kommunizieren über das sichere Protokoll miteinander und kontrollieren die versandten Daten inhaltlich. Durch eine Quittierung der Daten wird die Sicherheit redundant zur Verfügung gestellt. Die an die jeweilige Auswerteeinheit angeschaltete Überwachungsschaltung 214 bzw. 224 prüft den Datenstrom mittels Mustererkennung auf Gültigkeit und setzt im Fehlerfall die Auswerteeinheit 212 bzw. 222 in den sicheren Zustand.

Wie in Fig. 3 dargestellt, ermöglicht die Erfindung auch die Anbindung einfacher mechanischer Steuer- und Sensorelemente. Dargestellt sind wiederum die Teilnehmer 21 und 22, die über das serielle Bussystem 30 miteinander verbunden sind. In diesem Ausführungsbeispiel sind die

Busteilnehmer 21 und 22 derart mit dem mechanischen NOT-Aus-Taster 70 verschaltet, dass der Signalweg vom Ausgang der Auswerteeinheit 212 zum Eingang der Auswerteeinheit 222 durch den NOT-Aus-Taster 70 verläuft und die integrierten, redundanten Schalter 71 und 72 passiert. Der NOT-Aus-Taster 70 ist so ausgebildet, dass bei manueller Betätigung beide Schalter 71 und 72 gleichzeitig bedient werden. Durch den Datenaustausch zwischen den verteilten Auswerteeinheiten 212 und 222 wird ein Betätigen des NOT-Aus-Tasters sicher erkannt. Über entsprechende Schaltungen können neben den dargestellten Öffnern (Not-Aus-Taster) auch Schließer und Schließer-/Öffner-Kombinationen Verwendung finden. Diese sind auch mit separater Test-Signal-Einspeisung oder gemeinsamer Test-Signal-Einspeisung verwendbar.

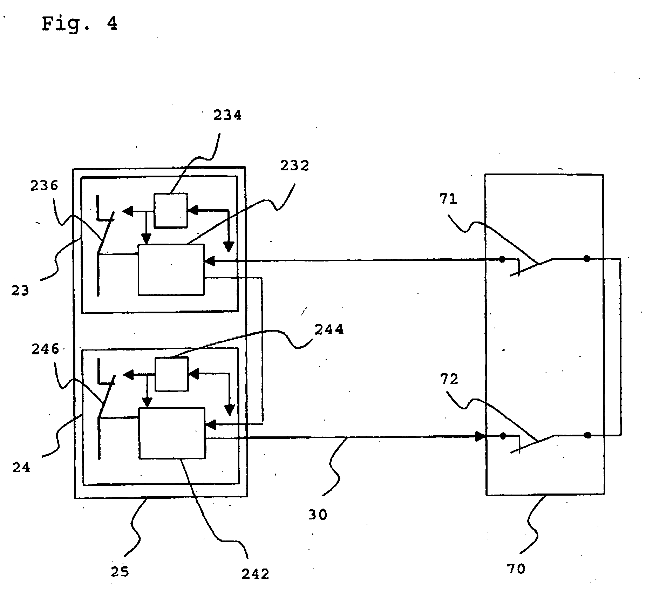

In Fig. 4 ist eine bevorzugte Abwandlung der in Fig. 3 dargestellten Ausführungsform gezeigt, bei der die Teilnehmer 23 und 24, die im wesentlichen den Teilnehmner 21 und 22 entsprechen, in einer gemeinsamen Baugruppe 25 angeordnet sind, welche mit dem NOT-Aus-Taster 70 verbunden wird. Die Teilnehmer 23 und 24 umfassen wiederum Auswerteeinheiten 232 bzw. 242, sowie zugeordnete Überwachungsschaltungen 234 bzw. 244, sowie Schnittstellen zu sicherheitsrelevanten Applikationen 236 bzw. 246. In diesem Ausführungsbeispiel verläuft der Signalweg vom Ausgang der Auswerteeinheit 242 zum Eingang der Auswerteeinheit 232 durch die Schalter 71 und 72 des NOT-Aus-Tasters 70, wobei der entsprechende Ausgang der Auswerteeinheit 232 mit dem entsprechenden Eingang der Auswerteeinheit 242b verbunden ist.

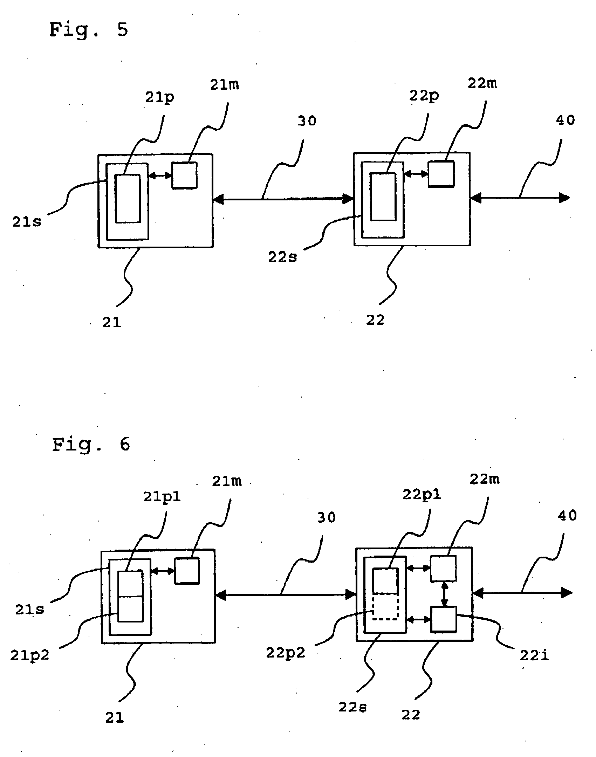

Fig. 5 zeigt eine schematische Darstellung der funktionalen Komponenten des in Fig. 2 dargestellten ersten und zweiten Teilnehmers 21 und 22. Zum Ausführen einer sicherheitsrelevanten Applikation ist in jedem der Teilnehmer 21 und 22 ein Speicher 21s bzw. 22s vorgesehen, in dem jeweils ein ausführbarer Ablaufcode 21p bzw. 22p abgelegt ist. Zur Ausführung der Applikation ist jeweils ein Mikroprozessor 21m bzw. 22m in den Teilnehmern 21 und 22 vorgesehen, der Zugriff auf den jeweiligen Speicher besitzt.

In den dargestellten Ausführungsbeispiel ist der Teilnehmer 21 als Sensor und der Teilnehmer 22 als E/A-Modul ausgebildet, die über das serielle Bussystem 30 miteinander kommunizieren. Das als Eingangskomponente wirkende E/A-Modul 22 ist zusätzlich an ein übergeordnetes Kommunikationssystem 40 angeschlossen, welches beispielsweise die Kommunikation mit einem übergeordneten Steuergerät ermöglicht.

Die Applikationen 21p und 22p sind im dargestellten Ausführungsbeispiel im wesentlichen identisch, um von den in Fig. 2 dargestellten korrespondierenden Auswerteeinheiten 212 bzw. 222 ausgeführt zu werden.

Fig. 6 zeigt eine bevorzugte Ausführungsvariante der funktionalen Komponenten des in Fig. 2 dargestellten ersten und zweiten Teilnehmers 21 und 22, wobei wiederum der Teilnehmer 21 als Sensor und der Teilnehmer 22 als korrespondierendes E/A-Modul ausgebildet sind. In dieser Ausführungsvariante verfügt der Teilnehmer 21 über ein in dem Speicher 21s hinterlegte Sicherheitsapplikation, umfassend die Applikationsteile 21p1 und 21p2, welche im korrespondierenden Teilnehmer 22 zunächst teilweise oder vollständig nicht zur Verfügung stehen.

Im dargestellten Ausführungsbeispiel verfügt der Teilnehmer 22 über ein in seinem Speicher 22s hinterlegten Grundfunktionalität 22p1, welche dem Applikationsteil 21p1 entspricht. In der Anlaufphase des Systems fordert der Teilnehmer 22 den fehlenden Applikationsteil 21p1 des Teilnehmers 21 an, der diesen daraufhin zum Teilnehmer 22 überträgt. Der Teilnehmer 22 speichert den empfangenen Applikationsteil 22p2 in Speicher 22s. Um ein hohes Maß an Flexibilität zu gewährleisten, ist in diesem Ausführungsbeispiel im Teilnehmer 22 ferner ein Interpreter 22i vorgesehen, welcher Zugriff auf den Speicher 22s hat und mit dem Mikroprozessor 22m verbunden ist. Der Interpreter 22i ist dazu ausgebildet, zumindest den zusätzlich zur Verfügung gestellten Ablaufcode 22p2 zu interpretieren und somit ein Ausführen durch den Mikroprozessor 22m zu ermöglichen.

Der zusätzliche Applikationsteil 22p2 kann dem Teilnehmer 22 alternativ auch von einer zentralen Steuereinheit basierend auf einer Projektierung eines Automatisierungssystems über das übergeordnete Kommunikationssystem 40 übermittelt werden. Auch kann die Übermittlung beispielsweise über eine separaten Kommunikationskanal erfolgen.

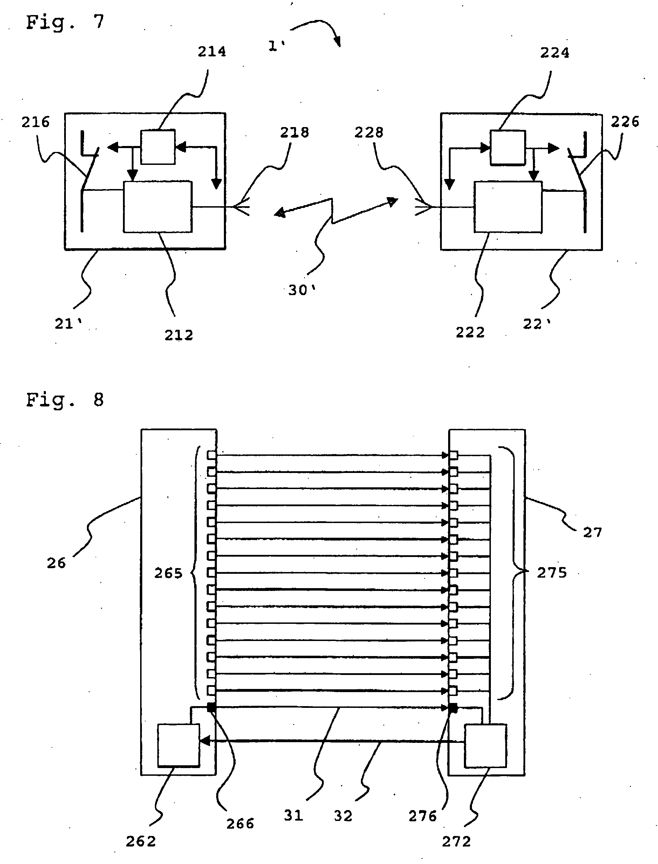

Fig. 7 zeigt ein Kommunikationssystem 1' mit den Teilnehmern 21' und 22', welche in Abwandlung der in Fig. 2 dargestellten Teilnehmer 21 und 22 über eine drahtlose serielle Schnittstelle 30' kommunizieren. Zu diesem Zweck weisen die Teilnehmer 21' und 22' entsprechende Transceiver 218 bzw. 228 auf, mittels derer eine sichere serielle Kommunikation zwischen den Teilnehmern 21' und 22' drahtlos ermöglichen. Im übrigen entspricht der Aufbau der Teilnehmer 21' und 22' dem der in Fig. 2 dargestellten Teilnehmer 21 und 22.

In Fig. 8 ist eine weitere Ausführungsform der Erfindung dargestellt. Vorgesehen ist ein Lichtgitter mit einem Sender 26 und einem Empfänger 27. Der Sender 26 umfasst eine Vielzahl von Lichtquellen 265, eine Auswerteeinheit 262 sowie eine separat ansteuerbare Lichtquelle 266. Der Empfänger 27 umfasst eine Vielzahl von Lichtsensoren 275, eine Auswerteeinheit 272, sowie einen separat auslesbaren Lichtsensor 276. Der Sender 26 und der Empfänger 27 bilden einen ersten und zweiten Teilnehmer eines seriellen Kommunikationssystems. Der serielle Datenaustausch zwischen der Auswerteeinheit 262 und der Auswerteeinheit 272 erfolgt in diesem Ausführungsbeispiel mittels eines durch die Lichtquelle 266 und den Lichtsensor 276 gebildeten optischen Datenübertragungskanal und einen elektrischen Rückkanal 32.

## Patentansprüche

1. Verfahren zur sicheren Datenübertragung zwischen wenigstens einem ersten (21, 21', 23, 26) und einem zweiten (22, 22', 24, 27) Teilnehmer eines zur Steuerung einer Maschine oder Anlage eingesetzten Kommunikationssystems (1, 1'), das zur seriellen Datenübertragung zwischen den Teilnehmern (21, 22, 21', 22', 23, 24, 26, 27) ausgebildet ist, wobei der erste Teilnehmer eine erste Auswerteeinheit (212, 232, 262) und der zweite Teilnehmer eine zweite Auswerteeinheit (222, 242, 272) umfasst, **gekennzeichnet durch** die Schritte:
- Übertragen einer Datennachricht von dem ersten Teilnehmer (21, 21', 23, 26) zu dem zweiten Teilnehmer (22, 22', 24, 27), wobei eine Überprüfung der in der **durch** den ersten Teilnehmer abzusendenden Datennachricht enthaltenen Daten auf Plausibilität **durch** die erste Auswerteeinheit erfolgt, bevor die Datennachricht zu dem zweiten Teilnehmer übertragen wird,
- Überprüfen der Datennachricht **durch** die zweite, in dem zweiten Teilnehmer angeordnete Auswerteeinheit, wobei nach Empfang der Datennachricht eine weitere Überprüfung der enthaltenen Daten auf Plausibilität **durch** die zweite Auswerteeinheit im zweiten Teilnehmer erfolgt, so dass eine redundante Auswertung von Daten erfolgt, die zur Steuerung sicherheitsrelevanter Prozesse einer Maschine oder Anlage dienen, wobei bei der Auswertung die erste und zweite Auswerteeinheit je einen Teil eines korrespondierenden Paares von Auswerteeinheiten zur Erreichung einer verteilten Redundanz bilden,
- Übertragen einer Quittungsnachricht von dem zweiten Teilnehmer zu dem ersten Teilnehmer in Abhängigkeit des Ergebnisses der Überprüfung der Datennachricht, und
- Überprüfen der Quittungsnachricht **durch** die erste, in dem ersten Teilnehmer angeordnete Auswerteeinheit, wobei das Überprüfen der Quittungsnachricht in einem Registrieren des Empfangs einer vordefinierten Nachricht besteht, wobei die Überprüfung auf Plausibilität eine Auswertung von Sensorsignalen oder Steuersignalen für Aktuatoren umfasst, wobei die Auswerteeinheiten über ein sicheres Protokoll miteinander kommunizieren und die versandten Daten inhaltlich kontrollieren.

2. Verfahren nach Anspruch 1, wobei die serielle Datenübertragung zwischen den Teilnehmern (21, 22, 21', 22', 23, 24, 26, 27) mittels eines Datenübertragungsprotokolls erfolgt.

3. Verfahren nach einem der vorstehenden Ansprüche, wobei die serielle Datenübertragung zwischen den Teilnehmern über einen kabelgebunden (30) oder drahtlos (30') ausgebildeten seriellen Bus erfolgt.

4. Verfahren nach einem der vorstehenden Ansprüche, wobei der erste und/oder der zweite Teilnehmer als Sensor oder Aktuator eines Automatisierungssystems ausgebildet ist.

5. Verfahren nach einem der vorstehenden Ansprüche, wobei die Datennachricht ein Ein- oder Ausgangssignal eines Sensors bzw. Aktors umfasst.

6. Verfahren nach einem der vorstehenden Ansprüche, wobei das Überprüfen der Quittungsnachricht ein Überprüfen der in der Nachricht enthaltenen Daten auf Plausibilität umfasst.

7. Verfahren nach einem der vorstehenden Ansprüche, wobei das Überprüfen der Quittungsnachricht ein Vergleichen von in der Quittungsnachricht enthaltenen Daten mit in der Datennachricht enthaltenen Daten umfasst.

8. Verfahren nach einem der vorstehenden Ansprüche, wobei zwischen den ersten und den zweiten Teilnehmer ein Steuer- oder Sensorelement (70) geschaltet ist, das keine Auswerteeinheit umfasst.

9. Verfahren nach Anspruch 8, wobei das Steuer- oder Sensorelement (70) als mechanisches Element ausgebildet ist.

10. Verfahren nach einem der vorstehenden Ansprüche, wobei jeder Auswerteeinheit (212, 222, 232, 242) eine Überwachungsschaltung (214, 224, 234, 244) zugeordnet ist, die den Datenstrom zu und/oder von der zugeordneten Auswerteeinheit (212, 222, 232, 242) gemäß einem vorgegebenen Protokoll auf Gültigkeit überwacht und im Fehlerfall die zugeordnete Auswerteeinheit (212, 222, 232, 242) und/oder einen durch die zugeordnete Auswerteeinheit gesteuerten Sensor oder Aktor in einen sicheren Zustand setzt.

11. Verfahren nach Anspruch 10 wobei das Überwachen des Datenstroms durch die Überwachungsschaltung (214, 224, 234, 244) das Erkennen eines vorgegebenen Musters umfasst.

12. Verfahren nach Anspruch 10 oder 11 wobei die Überwachungsschaltung (214, 224, 234, 244) die Funktionsfähigkeit der zugeordneten Auswerteeinheit (212, 222, 232, 242) überwacht.

13. Verfahren nach einem der vorstehenden Ansprüche, wobei das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem ausführenden Teilnehmer (22) hinterlegten Funktion (22p1, 22p2) erfolgt, und wobei vor Ausführen der Funktion Teile (22p2) der auszuführenden Funktion und/oder Parameter zum Ausführen der Funktion von einem weiteren Teilnehmer (21) zu dem ausführenden Teilnehmer (22) übertragen werden.

14. Verfahren nach einem der vorstehenden Ansprüche, wobei das den ersten und zweiten Teilnehmer umfassende Kommunikationssystem (1, 1') als Master/Slave-System ausgebildet ist, wobei der erste oder zweite Teilnehmer als Master ausgebildet ist.

15. Verfahren nach einem der vorstehenden Ansprüche, wobei der erste oder zweite Teilnehmer an ein übergeordnetes Bussystem (40) angeschlossen ist.

16. System zur Übertragung sicherheitsgerichteter Daten zur Steuerung eines Automatisierungssystems, insbesondere ausgebildet zur Ausführung eines Verfahrens nach einem der vorstehenden Ansprüche, umfassend
- ein serielles Kommunikationssystem (1) mit wenigstens einem ersten und einem zweiten daran angeschlossenen Teilnehmer (21, 22, 21', 22', 23, 24, 26, 27),
- wenigstens eine erste, in dem ersten Teilnehmer (21, 21', 23, 26) angeordnete Auswerteeinheit (212 , 232, 262), und
- wenigstens eine zweite, in dem zweiten Teilnehmer (22, 22', 24, 27) angeordnete Auswerteeinheit (222, 242, 272), **dadurch gekennzeichnet, dass**
die erste Auswerteeinheit dazu ausgebildet ist, eine Datennachricht zu dem zweiten Teilnehmer zu übertragen und die in der abzusendenden Datennachricht enthaltenen Daten auf Plausibilität zu überprüfen, bevor die Datennachricht zu dem zweiten Teilnehmer übertragen wird,
die zweite Auswerteeinheit zum Überprüfen der von dem ersten Teilnehmer empfangenen Datennachricht ausgebildet ist, wobei nach Empfang der Datennachricht eine weitere Überprüfung der enthaltenen Daten auf Plausibilität durch die zweite Auswerteeinheit im zweiten Teilnehmer erfolgt, so dass
eine redundante Auswertung von Daten erfolgt, die zur Steuerung sicherheitsrelevanter Prozesse einer Maschine oder Anlage dienen, wobei bei der Auswertung die erste und zweite Auswerteeinheit je einen Teil eines korrespondierenden Paares von Auswerteeinheiten zur Erreichung einer verteilten Redundanz bilden,
die zweite Auswerteinheit zum Generieren einer Quittungsnachricht in Abhängigkeit des Ergebnisses der Überprüfung der Datennachricht und zum Übertragen der Quittungsnachricht zu dem ersten Teilnehmer ausgebildet ist,
die erste Auswerteeinheit zum Überprüfen der von dem zweiten Teilnehmer empfangenen Quittungsnachricht ausgebildet ist, wobei das Überprüfen der Quittungsnachricht in einem Registrieren des Empfangs einer vordefinierten Nachricht besteht,
wobei die Überprüfung auf Plausibilität eine Auswertung von Sensorsignalen oder Steuersignalen für Aktuatoren umfasst, wobei die Auswerteeinheiten dazu ausgebildet sind, über ein sicheres Protokoll miteinander zu kommunizieren und dazu ausgebildet sind, die versandten Daten inhaltlich zu kontrollieren, und
der erste und/oder der zweite Teilnehmer dazu ausgebildet sind, im Fehlerfall eine Sicherheitsfunktion auszuführen.

17. System nach Anspruch 16, wobei das Datenübertragungsprotokoll des Kommunikationssystems (1) als sicheres Kommunikationsprotokoll ausgebildet ist.

18. System nach einem der Ansprüche 16 und 17, wobei das Kommunikationssystem (1, 1') zur seriellen Datenübertragung zwischen den Teilnehmern einen kabelgebundenen (30) oder drahtlosen (30') seriellen Bus umfasst.

19. System nach einem der Ansprüche 16-18, wobei der erste und/oder zweite Teilnehmer als Sensor oder Aktuator des Automatisierungssystems ausgebildet ist.

20. System nach einem der Ansprüche 16-19, wobei die erste und/oder zweite Auswerteeinheit zum Überprüfen von in einer Quittungsnachricht enthaltenen Daten auf Plausibilität ausgebildet ist.

21. System nach einem der Ansprüche 16-20, wobei die erste und/oder zweite Auswerteeinheit zum Vergleichen von in einer Datennachricht enthaltenen Daten mit in einer Quittungsnachricht enthaltenen Daten ausgebildet ist.

22. System nach einem der Ansprüche 16-21, wobei zwischen den ersten und den zweiten Teilnehmer ein Steuer- oder Sensorelement (70) geschaltet ist, das keine Auswerteeinheit umfasst.

23. System nach Anspruch 22, wobei das Steuer- oder Sensorelement (70) als mechanisches Element ausgebildet ist.

24. System nach einem der Ansprüche 16-23, wobei der erste (23) und der zweite (24) Teilnehmer in einer gemeinsamen Baugruppe (25) angeordnet sind.

25. System nach einem der Ansprüche 16-24, wobei jeder Auswerteeinheit (212, 222, 232, 242) eine Überwachungsschaltung (214, 224, 234, 244) zugeordnet ist, die dazu ausgebildet ist, den Datenstrom zu und/oder von der zugeordneten Auswerteeinheit (212, 222, 232, 242) gemäß einem vorgegebenen Protokoll auf Gültigkeit zu überwachen und im Fehlerfall die zugeordnete Auswerteeinheit (212, 222, 232, 242) und/oder einen durch die zugeordnete Auswerteeinheit gesteuerten Sensor oder Aktor in einen sicheren Zustand zu setzen.

26. System nach Anspruch 25 wobei die Überwachungschaltung (214, 224, 234, 244) zum Erkennen eines vorgegebenen Musters ausgebildet ist.

27. System nach Anspruch 25 oder 26, wobei die Überwachungsschaltung (214, 224, 234, 244) dazu ausgebildet ist, die Funktionsfähigkeit der zugeordneten Auswerteeinheit (212, 222, 232, 242) mittels einer Funktion zu überwachen.

28. System nach einem der Ansprüche 16-27, wobei wenigstens ein Teilnehmer dazu ausgebildet ist, das Überprüfen einer Datennachricht durch eine Auswerteeinheit, das Überprüfen einer Quittungsnachricht durch eine Auswerteeinheit, das Überwachen des Datenstroms durch eine Überwachungsschaltung und/oder das Überwachen der Funktionsfähigkeit einer Auswerteeinheit durch eine Überwachungsschaltung durch Ausführen einer in dem Teilnehmer (22) hinterlegten Funktion (22p1, 22p2) durchzuführen, wobei der wenigstens eine Teilnehmer (22) ferner dazu ausgebildet ist, zum Ausführen der Funktion ausführbare Funktionsteile (22p2) und/oder Parameter von einem weiteren Teilnehmer (21) anzufordern.

29. System nach einem der Ansprüche 16-28, wobei das den ersten und zweiten Teilnehmer umfassende Kommunikationssystem (1, 1') als Master/Slave-System ausgebildet ist, wobei der erste oder zweite Teilnehmer als Master ausgebildet ist.

30. System nach einem der Ansprüche 16-29, wobei der erste oder zweite Teilnehmer an ein weiteres, übergeordnetes Kommunikationssystem (40) angeschlossen ist.

## Claims

1. A method for secure data transfer between at least a first (21, 21', 23, 26) and a second (22, 22', 24, 27) subscriber of a communication system (1, 1') used for controlling a machine or system and adapted for serial data transfer between said subscribers (21, 22, 21', 22', 23, 24, 26, 27), with the first subscriber comprising a first evaluation unit (212, 232, 262) and the second subscriber comprising a second evaluation unit (222, 242, 272), **characterised by** the steps of:
- transmitting a data message from the first subscriber (21, 21', 23, 26) to the second subscriber (22, 22', 24, 27), wherein the data contained in the data message to be transmitted by the first subscriber is checked for plausibility by the first evaluation unit before the data message is transmitted to the second subscriber;
- checking said data message by the second evaluation unit arranged in the second subscriber, wherein after receipt of said data message the contained data is checked once more for plausibility by the second evaluation unit in the second subscriber, so that a redundant evaluation of data which are used to control safety-relevant processes of a machine or system is performed, wherein in said evaluation the first and second evaluation units each form a part of a corresponding pair of evaluation units for achieving shared redundancy;
- transmitting an acknowledgement message from the second subscriber to the first subscriber based on the result of the checking of the data message; and
- checking the acknowledgement message, by the first evaluation unit arranged in the first subscriber,
wherein the checking of the acknowledgement message comprises registering the receipt of a predefined message, wherein the checking for plausibility comprises evaluation of sensor signals or control signals for actuators, wherein the evaluation units communicate with each other via a secure protocol and are checking the content of the transmitted data.

2. The method according to claim 1, wherein the serial data transfer between the subscribers (21, 22, 21', 22', 23, 24, 26, 27) is effected using a data transfer protocol.

3. The method according to any of the preceding claims, wherein the serial data transfer between the subscribers is effected using a wired (30) or wireless (30') serial bus.

4. The method according to any of the preceding claims, wherein the first and/or the second subscriber is a sensor or actuator of an automation system.

5. The method according to any of the preceding claims, wherein the data message comprises an input or output signal of a sensor or actuator.

6. The method according to any of the preceding claims, wherein the checking of the acknowledgement message comprises checking the data contained in said message for plausibility.

7. The method according to any of the preceding claims, wherein the checking of the acknowledgement message comprises comparing the data contained in the acknowledgement message with data contained in the data message.

8. The method according to any of the preceding claims, wherein a control or sensor element (70) that does not include an evaluation unit is connected between the first and the second subscriber.

9. The method according to claim 8, wherein the control or sensor element (70) is a mechanical element.

10. The method according to any of the preceding claims, wherein each evaluation unit (212, 222, 232, 242) has associated therewith a monitoring circuit (214, 224, 234, 244) which monitors the data stream to and/or from the associated evaluation unit (212, 222, 232, 242) for validity according to a predefined protocol and in the event of a fault sets the associated evaluation unit (212, 222, 232, 242) and/or a sensor or actuator controlled by the associated evaluation unit into a safe state.

11. The method according to claim 10, wherein the monitoring of the data stream by the monitoring circuit (214, 224, 234, 244) comprises identifying a predefined pattern.

12. The method according to claim 10 or 11, wherein the monitoring circuit (214, 224, 234, 244) monitors the associated evaluation unit (212, 222, 232, 242) for operability.

13. The method according to any of the preceding claims, wherein the checking of a data message by an evaluation unit, the checking of an acknowledgement message by an evaluation unit, the monitoring of the data stream by a monitoring circuit, and/or the monitoring of an evaluation unit for operability by a monitoring circuit is effected by executing a function (22pl, 22p2) stored in the executing subscriber (22), and wherein before the function is executed, parts (22p2) of the function to be executed and/or parameters for executing the function are transferred from another subscriber (21) to the executing subscriber (22).

14. The method according to any of the preceding claims, wherein the communication system (1, 1') comprising the first and second subscribers is configured as a master/slave system, with the first or the second subscriber being configured as the master.

15. The method according to any of the preceding claims, wherein the first or the second subscriber is connected to a higher-level bus system (40).

16. A system for transferring safety-oriented data for controlling an automation system, in particular configured for performing a method according to any of the preceding claims, comprising:
- a serial communication system (1) comprising at least a first and a second subscriber (21, 22, 21', 22', 23, 24, 26, 27) connected thereto;
- at least a first evaluation unit (212, 232, 262) arranged in the first subscriber (21, 21', 23, 26); and
- at least a second evaluation unit (222, 242, 272) arranged in the second subscriber (22, 22', 24, 27);
**characterised in that**
the first evaluation unit is adapted for transmitting a data message to the second subscriber and for checking the data contained in the data message to be transmitted for plausibility before the data message is transmitted to the second subscriber;
the second evaluation unit is adapted for checking the data message received from the first subscriber, wherein after receipt of said data message the data contained therein is checked once more for plausibility by the second evaluation unit in the second subscriber,
so that a redundant evaluation of data which are used to control safety-relevant processes of a machine or system is performed, wherein in said evaluation the first and second evaluation units each form a part of a corresponding pair of evaluation units for achieving shared redundancy;
the second evaluation unit is adapted for generating an acknowledgement message based on the result of the checking of the data message, and for transmitting the acknowledgement message to the first subscriber; and the first evaluation unit is adapted for checking the acknowledgement message received from the second subscriber, wherein the checking of the acknowledgement message comprises registering the receipt of a predefined message;
wherein the checking for plausibility comprises evaluation of sensor signals or control signals for actuators, wherein the evaluation units are adapted for communicating with each other via a secure protocol and for checking the content of the transmitted data; and wherein the first and/or the second subscriber is adapted for executing a safety function in the event of a fault.

17. The system according to claim 16, wherein the data transfer protocol of the communication system (1) is a secure communication protocol.

18. The system according to any of claims 16 and 17, wherein the communication system (1, 1') comprises a wired (30) or wireless (30') serial bus for serial data transfer between the subscribers.

19. The system according to any of claims 16 to 18, wherein the first and/or the second subscriber is a sensor or an actuator of the automation system.

20. The system according to any of claims 16 to 19, wherein the first and/or the second evaluation unit is adapted for checking data contained in an acknowledgement message for plausibility.

21. The system according to any of claims 16 to 20, wherein the first and/or the second evaluation unit is adapted for comparing data contained in a data message with data contained in an acknowledgment message.

22. The system according to any of claims 16 to 21, wherein a control or sensor element (70) that does not include an evaluation unit is connected between the first and the second subscriber.

23. The system according to claim 22, wherein the control or sensor element (70) is a mechanical element.

24. The system according to any of claims 16 to 23, wherein the first (23) and the second (24) subscriber are arranged in a common module (25).

25. The system according to any of claims 16 to 24, wherein each evaluation unit (212, 222, 232, 242) has associated therewith a monitoring circuit (214, 224, 234, 244) which is adapted for monitoring for validity the data stream to and/or from the associated evaluation unit (212, 222, 232, 242) according to a predefined protocol and, in the event of a fault, for setting the associated evaluation unit (212, 222, 232, 242) and/or a sensor or actuator controlled by the associated evaluation unit into a safe state.

26. The system according to claim 25, wherein the monitoring circuit (214, 224, 234, 244) is adapted for identifying a predefined pattern.

27. The system according to claim 25 or 26, wherein the monitoring circuit (214, 224, 234, 244) is adapted for monitoring the associated evaluation unit (212, 222, 232, 242) for operability using a function.

28. The system according to any of claims 16 to 27, wherein at least one subscriber is adapted for effecting the checking of a data message by an evaluation unit, the checking of an acknowledgement message by an evaluation unit, the monitoring of the data stream by a monitoring circuit, and/or the monitoring of an evaluation unit for operability by a monitoring circuit by executing a function (22pl, 22p2) stored in the subscriber (22), wherein the at least one subscriber (22) is further adapted for requesting, from another subscriber (21), executable parts of the function (22p2) and/or parameters.

29. The system according to any of claims 16 to 28, wherein the communication system (1, 1') comprising the first and second subscribers is configured as a master/slave system, with the first or the second subscriber being configured as the master.

30. The system according to any of claims 16 to 29, wherein the first or the second subscriber is connected to a further, higher-level communication system (40).

## Revendications

1. Procédé de transmission de données sécurisée entre au moins un premier dispositif utilisateur (21, 21', 23, 26) et un deuxième dispositif utilisateur (22, 22', 24, 27) d'un système de communication (1, 1') utilisé pour commander une machine ou une installation, ledit système étant conçu pour transmettre des données en série entre les dispositifs utilisateurs (21, 22, 21', 22', 23, 24, 26, 27), le premier dispositif utilisateur comprenant une première unité d'évaluation (212, 232, 262) et le deuxième dispositif utilisateur comprenant une deuxième unité d'évaluation (222, 242, 272), **caractérisé par** les étapes consistant à :
- transmettre un message de données du premier dispositif utilisateur (21, 21', 23, 26) au deuxième dispositif utilisateur (22, 22', 24, 27), la plausibilité des données contenues dans le message de données destiné à être émis par le premier dispositif utilisateur étant contrôlée par la première unité d'évaluation, avant que le message de données n'ait été transmis au deuxième dispositif utilisateur,
- contrôler le message de données au moyen de la deuxième unité d'évaluation disposée dans le deuxième dispositif utilisateur, un contrôle supplémentaire de la plausibilité des données contenues étant effectué par la deuxième unité d'évaluation dans le deuxième dispositif utilisateur après réception du message de données, de sorte qu'il s'effectue une évaluation redondante des données qui servent à commander des processus touchant à la sécurité d'une machine ou d'une installation, la première et la deuxième unité d'évaluation formant chacune, pour l'évaluation, une partie d'une paire correspondante d'unités d'évaluation afin d'obtenir une redondance distribuée,
- transmettre un message d'accusé de réception du deuxième dispositif utilisateur au premier dispositif utilisateur en fonction du résultat du contrôle du message de données, et
- contrôler le message d'accusé de réception au moyen de la première unité d'évaluation disposée dans le premier dispositif utilisateur, le contrôle du message d'accusé de réception résidant dans un enregistrement de la réception d'un message prédéfini, le contrôle de la plausibilité comportant une évaluation des signaux de détection ou des signaux de commande pour des actionneurs, les unités d'évaluation communiquant entre elles au moyen d'un protocole sécurisé et contrôlant le contenu des données envoyées.

2. Procédé selon la revendication 1, dans lequel la transmission de données série entre les dispositifs utilisateurs (21, 22, 21', 22', 23, 24, 26, 27) s'effectue au moyen d'un protocole de transmission de données.

3. Procédé selon l'une des revendications précédentes, dans lequel la transmission de données série entre les dispositifs utilisateurs s'effectue au moyen d'un bus série filaire (30) ou sans fil (30').

4. Procédé selon l'une des revendications précédentes, dans lequel le premier et/ou le deuxième dispositif utilisateur est réalisé sous la forme d'un capteur ou d'un actionneur d'un système d'automatisation.

5. Procédé selon l'une des revendications précédentes, dans lequel le message de données comprend un signal d'entrée ou de sortie d'un capteur ou d'un actionneur.

6. Procédé selon l'une des revendications précédentes, dans lequel le contrôle du message d'accusé de réception comprend un contrôle de la plausibilité des données contenues dans le message.

7. Procédé selon l'une des revendications précédentes, dans lequel le contrôle du message d'accusé de réception comprend une comparaison des données contenues dans le message d'accusé de réception aux données contenues dans le message de données.

8. Procédé selon l'une des revendications précédentes, dans lequel un élément de commande ou de détection (70) ne comprenant pas d'unité d'évaluation est raccordé entre le premier et le deuxième dispositif utilisateur.

9. Procédé selon la revendication 8, dans lequel l'élément de commande ou de détection (70) est réalisé sous la forme d'un élément mécanique.

10. Procédé selon l'une des revendications précédentes, dans lequel un circuit de contrôle (214, 224, 234, 244), qui contrôle la validité du flux de données allant vers l'unité d'évaluation (212, 222, 232, 242) associée et/ou partant de cette dernière conformément à un protocole prédéfini, et qui, en cas d'erreur, place l'unité d'évaluation (212, 222, 232, 242) associée et/ou un capteur ou un actionneur commandé par l'unité d'évaluation associée dans un état sécurisé, est associé à chaque unité d'évaluation (212, 222, 232, 242).

11. Procédé selon la revendication 10, dans lequel le contrôle du flux de données par le circuit de contrôle (214, 224, 234, 244) comprend la détection d'un motif prédéfini.

12. Procédé selon la revendication 10 ou 11, dans lequel le circuit de contrôle (214, 224, 234, 244) contrôle le bon fonctionnement de l'unité d'évaluation (212, 222, 232, 242) associée.

13. Procédé selon l'une des revendications précédentes, dans lequel le contrôle d'un message de données est effectué par une unité d'évaluation, le contrôle d'un message d'accusé de réception est effectué par une unité d'évaluation, le contrôle du flux de données est effectué par un circuit de contrôle et/ou le contrôle du bon fonctionnement d'une unité d'évaluation est effectué par un circuit de contrôle par exécution d'une fonction (22p1, 22p2) mise en mémoire dans le dispositif utilisateur (22) exécutant, et avant l'exécution de ladite fonction, des parties (22p2) de la fonction à exécuter et/ou des paramètres permettant l'exécution de la fonction sont transmises d'un autre dispositif utilisateur (21) au dispositif utilisateur (22) exécutant.

14. Procédé selon l'une des revendications précédentes, dans lequel le système de communication (1, 1') comprenant le premier et le deuxième dispositif utilisateur est réalisé sous la forme d'un système maître/esclave, le premier ou le deuxième dispositif utilisateur étant le maître.

15. Procédé selon l'une des revendications précédentes, dans lequel le premier ou le deuxième dispositif utilisateur est raccordé à un système de bus (40) supérieur.

16. Système de contrôle de données orientées sécurité pour la commande d'un système d'automatisation, conçu en particulier pour mettre en oeuvre un procédé selon l'une des revendications précédentes, comprenant :
- un système de communication en série (1) comprenant au moins un premier et un deuxième dispositif utilisateur (21, 22, 21', 22', 23, 24, 26, 27) raccordé audit premier dispositif utilisateur,
- au moins une première unité d'évaluation (212, 232, 262) disposée dans le premier dispositif utilisateur (21, 21', 23, 26), et
- au moins une deuxième unité d'évaluation (222, 242, 272) disposée dans le deuxième dispositif utilisateur (22, 22', 24, 27),
**caractérisé en ce que** :
la première unité d'évaluation est conçue pour transmettre un message de données au deuxième dispositif utilisateur et pour contrôler la plausibilité des données contenues dans le message de données à envoyer, avant que le message de données ne soit transmis au deuxième dispositif utilisateur,
la deuxième unité d'évaluation est conçue pour contrôler le message de données reçu par le premier dispositif utilisateur, un contrôle supplémentaire de la plausibilité des données contenues étant mis en oeuvre par la deuxième unité d'évaluation dans le deuxième dispositif utilisateur après réception du message de données,
de sorte qu'il s'effectue une évaluation redondante des données qui servent à commander des processus touchant à la sécurité d'une machine ou d'une installation, la première et la deuxième unité d'évaluation formant chacune, pour l'évaluation, une partie d'une paire correspondante d'unités d'évaluation afin d'obtenir une redondance distribuée,
la deuxième unité d'évaluation est conçue pour générer un message d'accusé de réception en fonction du résultat du contrôle du message de données et pour transmettre le message d'accusé de réception au premier dispositif utilisateur,
la première unité d'évaluation est conçue pour contrôler le message d'accusé de réception reçu par le deuxième dispositif utilisateur, le contrôle du message d'accusé de réception étant présent dans un enregistrement de la réception d'un message prédéfini,
le contrôle de la plausibilité comportant une évaluation des signaux de détection ou des signaux de commande pour des actionneurs, les unités d'évaluation étant conçues pour communiquer entre elles au moyen d'un protocole sécurisé et étant conçues pour contrôler le contenu des données envoyées, et
le premier et/ou le deuxième dispositif utilisateur étant conçus pour exécuter une fonction de sécurité en cas d'erreur.

17. Système selon la revendication 16, dans lequel le protocole de transmission de données du système de communication (1) est réalisé sous la forme d'un protocole de communication sécurisé.

18. Système selon l'une des revendications 16 et 17, dans lequel le système de communication (1, 1') comprend un bus série filaire (30) ou sans fil (30') pour la transmission de données série entre les dispositifs utilisateurs.

19. Système selon l'une des revendications 16 à 18, dans lequel le premier et/ou le deuxième dispositif utilisateur sont réalisés sous la forme d'un capteur ou d'un actionneur du système d'automatisation.

20. Système selon l'une des revendications 16 à 19, dans lequel la première et/ou la deuxième unité d'évaluation sont conçues pour contrôler la plausibilité des données contenues dans un message d'accusé de réception.

21. Système selon l'une des revendications 16 à 20, dans lequel la première et/ou la deuxième unité d'évaluation sont conçues pour comparer les données contenues dans un message de données aux données contenues dans un message d'accusé de réception.

22. Système selon l'une des revendications 16 à 21, dans lequel un élément de commande ou de détection (70) ne comprenant pas d'unité d'évaluation est raccordé entre le premier et le deuxième dispositif utilisateur.

23. Système selon la revendication 22, dans lequel l'élément de commande ou de détection (70) est réalisé sous la forme d'un élément mécanique.

24. Système selon l'une des revendications 16 à 23, dans lequel le premier dispositif utilisateur (23) et le deuxième dispositif utilisateur (24) sont disposés dans un bloc commun (25).

25. Système selon l'une des revendications 16 à 24, dans lequel un circuit de contrôle (214, 224, 234, 244), qui est conçu pour contrôler la validité du flux de données allant vers l'unité d'évaluation (212, 222, 232, 242) associée et/ou partant de cette dernière conformément à un protocole prédéfini, et, en cas d'erreur, pour placer l'unité d'évaluation (212, 222, 232, 242) associée et/ou un capteur ou un actionneur commandé par l'unité d'évaluation associée dans un état sécurisé, est associé à chaque unité d'évaluation (212, 222, 232, 242).

26. Système selon la revendication 25, dans lequel le circuit de contrôle (214, 224, 234, 244) est conçu pour détecter un motif prédéfini.

27. Système selon la revendication 25 ou 26, dans lequel le circuit de contrôle (214, 224, 234, 244) est conçu pour contrôler le bon fonctionnement de l'unité d'évaluation (212, 222, 232, 242) associée au moyen d'une fonction.

28. Système selon l'une des revendications 16 à 27, dans lequel au moins un dispositif utilisateur est conçu pour mettre en oeuvre le contrôle d'un message de données au moyen d'une unité d'évaluation, pour mettre en oeuvre le contrôle d'un message d'accusé de réception au moyen d'une unité d'évaluation, pour mettre en oeuvre le contrôle du flux de données au moyen d'un circuit de contrôle et/ou pour mettre en oeuvre le contrôle du bon fonctionnement d'une unité d'évaluation au moyen d'un circuit de contrôle par exécution d'une fonction (22p1, 22p2) mise en mémoire dans le dispositif utilisateur (22), l'au moins un dispositif utilisateur (22) étant conçu en outre pour exécuter des parties (22p2) de la fonction pouvant être exécutées et/ou pour demander les paramètres d'un autre dispositif utilisateur (21).

29. Système selon l'une des revendications 16 à 28, dans lequel le système de communication (1, 1') comprenant le premier et le deuxième dispositif utilisateur est réalisé sous la forme d'un système maître/esclave, le premier ou le deuxième dispositif utilisateur étant le maître.

30. Système selon l'une des revendications 16 à 29, dans lequel le premier ou le deuxième dispositif utilisateur est raccordé à un autre système de communication (40) supérieur.
